# EUROPÄISCHE PATENTSCHRIFT

(11) **EP 3 077 181 B1**
(45) Veröffentlichungstag und Bekanntmachung des Hinweises auf die Patenterteilung: **21.04.2021**
(21) Anmeldenummer: 14823886.8
(22) Anmeldetag: 01.12.2014
(51) Int. Cl.: B29C 64/259, B29C 64/232, B22F 3/105, B33Y 30/00

(54) **BAUBEHÄLTER MIT VERFAHRBAREN SEITENWÄNDEN**
BUILDING CONTAINER WITH MOVABLE SIDE WALLS
RÉCIPIENT POURVU DE PAROIS LATÉRALES MOBILES

(30) Priorität: 02.12.2013 DE 102013018031
(43) Veröffentlichungstag der Anmeldung: 12.10.2016
(73) Patentinhaber: voxeljet AG, 86316 Friedberg (DE)
(72) Erfinder: EDERER, Ingo, 82269 Geltendorf (DE); GÜNTHER, Daniel, 81317 München (DE); HARTMANN, Andreas, Dominik, 86391 Stadtbergen (DE); HEYMEL, Bastian, 86153 Augsburg (DE)
(74) Vertreter: Helbig, Christian
(86) Internationale Anmeldenummer: PCT/DE2014/000609
(87) Internationale Veröffentlichungsnummer: WO 2015/081926

(56) Entgegenhaltungen:
- EP-A2- 1 775 103
- WO-A1-90/03893
- WO-A2-2004/005014
- DE-A1-102010 015 451

## Beschreibung

Die Erfindung betrifft eine Vorrichtung sowie deren Verwendung in einem Verfahren zum Herstellen dreidimensionaler Modelle.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann von Pulveranhaftungen z.B. durch händisches Abbürsten befreit werden.

Das 3D-Drucken auf Basis pulverförmiger Werkstoffe und Eintrag flüssiger Binder ist unter den Schichtbautechniken das schnellste Verfahren.
Mit diesem Verfahren lassen sich verschiedene Partikelmaterialien, dazu zählen - nicht erschöpfend - natürliche biologische Rohstoffe, polymere Kunststoffe, Metalle, Keramiken und Sande, verarbeiten.

Die in derartigen Verfahren verwendeten Maschinen enthalten oft einen Wechselbehälter, der in die 3D-Druckmaschine ein- und ausgefahren werden kann, um so die Maschinenlaufzeiten zu erhöhen. Der Wechselbehälter kann aus der Maschine ausgefahren werden, um die Bauteile von nicht verfestigtem Material zu befreien, d.h. zu entpacken. Ein anderer Wechselbehälter kann dann sofort in die Maschine eingefahren werden und es kann sofort weitergedruckt werden, sodass es zu keinen unnötigen unproduktiven Standzeiten der Maschinen kommt. Derartige Wechselbehälter weisen eine Bauplattform auf, auf die das Partikelmaterial aufgetragen wird. Diese Bauplattform ist in der Regel höhenverstellbar und wird während des 3D-Druckprozesses nach unten verfahren bis der Druckprozess abgeschlossen ist Durch das Verfahren und die Positionierung der Bauplattform wird die gewünschte Schichtstärke eingestellt.

Die genaue Positionierung der Bauplattform ist hierbei sehr wichtig und entscheidend für die Herstellung von formgenauen Bauteilen. Dabei ist nicht nur die Positionierung der Baupattform am Antriebsangriffspunkt wichtig, sondern eine gleichmäßige Positionierung aller Punkte der Bauplattform hat Einfluss auf die Baugenauigkeit. Mögliche Deformationen der Bauplattform stellen ein Problem für ein genaues und präzises Herstellen der Bauteile dar.

Eine genaue und gleichmäßige Positionierung stellt bei großen Maschinen aber eine große Schwierigkeit dar. Durch die großen Abmessungen entstehen hohe Biegemomente, die die Bauplattform deformieren. Wird die Bauplattform entsprechend ausgesteift, sind allerdings wiederum hohe Massen exakt zu positionieren. Die verschiedenen Aspekte dieser Probleme reduzieren die erreichbare Genauigkeit der Vorrichtung oder stehen einem akzeptablen Kostenrahmen entgegen.

Die Kräfte und die damit resultierenden Biegemomente werden durch unterschiedliche Einflüsse erzeugt. Zum einen wirkt die im Bauprozess wachsende Pulverschüttung als wachsende Flächenlast. Zum zweiten drückt die entstehende Schüttung auf die Wände des Baubehälters. Hier ergeben sich Reaktionskräfte, die wiederum auf die Bauplattform wirken. Zusätzlich werden Kräfte durch die Dichtung verursacht, die die bewegte Bauplattform gegen die stehenden Seitenwände abdichtet.

Für die wachsende Flächenlast werden Lösungen in Patentschriften beschrieben. So offenbart beispielsweise DE 10 2010 013 733 A1 eine Vorrichtung bei der der Baubehälter als unbewegter Arbeitstisch ausgeführt wird. Die Vorrichtungen zum Erzeugen einer neuen Pulverschicht und zum selektiven Verfestigen sind dabei in der Baurichtung der Vorrichtung verschieblich. Die beschriebene Bauplattform kann konstruktiv einfach den Steifigkeitsanforderungen angepasst werden. Die Vorrichtung ist allerdings durch ihre wandlose Ausführung im verwendbaren Materialspektrum beschränkt.

Die Dichtungskräfte können durch konstruktive Maßnahmen beeinflusst werden. So ist es eine Möglichkeit, einen Baubehälter zu verwenden, der mit einer Filzdichtung ausgestattet ist, um die Reibung der Dichtung zu senken. Ebenso können ausblasbare Dichtungen verwendet werden, um die Anpresskraft so niedrig wie möglich zu halten.

Die seitliche Reibwirkung der Schüttung gegen die Seitenwände ist bei Baubehältern oder Wechselbehältern nach dem Stand der Technik ein ungelöstes Problem. Die Wirkungen der daraus resultierenden Kräfte werden nach dem Stand der Technik durch konstruktive Maßnahmen gemildert. Dabei werden Baubehälter verwendet, deren Antriebspunkte zur Minimierung der Durchbiegung gewählt wurden. Hier können Flächenlasten durch das Materialgewicht und Reibungswirkung und Linienlasten durch die Dichtung berücksichtigt werden. Trotz dieser Optimierung ergeben sich immer noch massivere Konstruktionen als zum eigentlichen Abstützen der Gewichtskraft notwendig wären.

Eine ebenso konstruktive Maßnahme zur Reduzierung der Kraftwirkungen ist die Verkürzung des Kraftflusses in der Vorrichtung. Dazu wird z.B. in DE 100 47 614 C2 ein Durchgriff durch die Baubehälterwand realisiert. Dieser Durchgriff wird durch ein Band oder einen Vorhang gegen Durchfließen des Partikelmaterials abgedichtet. Für schwere Schüttungen sind Vorrichtungen entsprechend groß auszuführen. Die Lösung mit Vorhang ist nur für leichtes Partikelmaterial geeignet, das kaum Druck auf die Wand ausübt. WO 90/03893 A1 beschreibt ebenfalls eine Vorrichtung zur Herstellung dreidimensionaler Modelle mittels Schichtaufbautechnik.

Insbesondere entsteht beim Verfahren der Bauplattform seitlich eine Reibung, die dazu führt, dass es innerhalb des partikulären Auftragsmaterials zu Spannungen kommt. Durch diese Spannungen kann es zu Bewegungen im partikulären Auftragsmaterial kommen und dadurch werden die vorbestimmten und aufgrund der CAD Daten gedruckten Bauteilpunkte verschoben. Letztendlich weichen dann die in dem Bauteil vorhandenen Raumpunkte von den CAD Daten ab und das gedruckte Bauteil entspricht nicht mehr 1:1 dem Datensatz. Das gedruckte Bauteil ist somit ungenau. Diese Ungenauigkeit beruht zu einem großen Teil auf der Reibungsproblematik.

Allerdings wurde bisher dieses Problem in der Literatur und dem Stand der Technik nicht als Problem und Ursache für ungenau hergestellte Bauteile erkannt. Somit wurde dieses Problem auch weder in einem zufriedenstellenden Maße adressiert noch gibt es herzu Lösungsansätze in der Literatur oder dem Stand der Technik.

Es ist daher eine Aufgabe der Erfindung eine Vorrichtung bereitzustellen, die die oben beschriebenen Probleme löst und insbesondere einen Wechselbehälter bereitstellt, mit dem qualitativ hochwertige Bauteile mit hoher Abbildungsgenauigkeit herstellbar sind und insbesondere Wechselbehälter mit verminderter Reibungsproblematik zur Verfügung stellt oder eine Lösung, die zumindest die Nachteile des Standes der Technik vermeidet oder zumindest vermindern hilft.

### Kurze Beschreibung der Erfindung

Die Erfindung betrifft einen Baubehälter gemäß vorliegendem Anspruch 1, der die Herstellung von hochwertigen Bauteilen ermöglicht, und der insbesondere eine verminderte Reibungsproblematik aufweist. Dies wird erreicht durch zwei, vorzugsweise drei, bevorzugt vier, seitlich angeordnete bewegliche Seitenwände, die sich mit mit der selben Geschwindigkeit bewegen lassen wie die Bauplattform in dem erfindungsgemäße Baubehälter.

Insbesondere betrifft die Erfindung einen Baubehälter für eine Vorrichtung zum Herstellen dreidimensionaler Modelle mittels Schichtaufbautechnik, der aufweist ein Baufeld auf einer Bauplattform, die in dem Baubehälter höhenverstellbar und vorzugsweise aus ihm entnehmbar ist, mindestens zwei Seitenwände, die so ausgestaltet sind, dass beim Verfahren der Bauplattform die Gleitreibung zwischen den aufgebauten Schichten und den Seitenwänden vermindert oder im Wesentlichen vermieden wird, wobei die Bauplattform und die mindestens zwei Seitenwände mit gleicher Geschwindigkeit verfahren werden, wobei im Baubehälter mindestens eine seitlich angeordnete biegeweiche Wand (402) durch mindestens eine seitlich angeordnete biegesteife Wand (400) abgestützt ist, wobei diese Anordnung der Wände mindestens an zwei Seiten des Baubehälters vorhanden ist und die biegeweiche Wand (402) auf mindestens einer Umlenkrolle (700) umgelenkt wird.

In einem weiteren Aspekt betrifft die Erfindung ein 3D-Druckverfahren, in dem der erfindungsgemäße Baubehälter (Wechselbehälter) einsetzbar ist.

### Ausführliche Beschreibung der Erfindung

Im Folgenden werden einige Begriffe der Erfindung näher erläutert.

Im Sinne der Erfindung sind "3D-Druckverfahren" alle aus dem Stand der Technik bekannten Verfahren, die den Aufbau von Bauteilen in dreidimensionalen Formen ermöglichen und mit den beschriebenen Verfahrenskomponenten und Vorrichtungen kompatibel sind. Insbesondere sind dies Pulver-basierte Verfahren, wie beispielsweise SLS (Selective Laser Sintering).

"Selektiver Binderauftrag" oder "Selektiver Bindersystemauftrag" kann im Sinne der Erfindung nach jedem Partikelmaterialauftrag erfolgen oder je nach den Erfordernissen des Formkörpers und zur Optimierung der Formkörperherstellung auch unregelmäßig erfolgen, d.h. nicht linear und parallel nach jedem Partikelmaterialauftrag. "Selektiver Binderauftrag" oder "Selektiver Bindersystemauftrag" kann somit individuell und im Verlauf der Formkörperherstellung eingestellt werden.

"Formkörper" oder "Bauteil" im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

Als "Vorrichtung" zum Durchführen des erfindungsgemäßen Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile, Dosiervorrichtung und Wärmemittel und andere dem Fachmann bekannte Bauteile, die deshalb hier nicht näher ausgeführt werden.

Als "Partikelmaterialien" können alle für den Pulver-basierten 3D Druck bekannten Materialien verwendet werden, insbesondere Sande, Keramikpulver, Metallpulver, Kunststoffe, Holzpartikel, Faserwerkstoffe, Cellulosen oder/und Lactosepulver. Das Partikelmaterial ist vorzugsweise ein trocken frei fließendes und ein kohäsives schnittfestes Pulver.

"Bauraum" ist der geometrische Ort in dem die Partikelmaterialschüttung während des Bauprozesses durch wiederholtes Beschichten mit Partikelmaterial wächst. Im Allgemeinen wird der Bauraum durch einen Boden, die Bauplattform, durch Wände und eine offene Deckfläche, die Bauebene, begrenzt.

Ein "Baubehälter" oder insbesondere "Wechselbehälter" im Sinn der Erfindung realisiert einen Bauraum. Er weist demnach einen Boden, Wände und eine offene Zugangsfläche, die Bauebene, auf. Der Baubehälter weist immer Teile auf, die sich relativ zum Gestell der 3D-Druckvorrichtung nicht bewegen. Austauschbare Baubehälter ermöglichen es die Maschine quasi ständig zu betreiben. Während die Teile eines ersten Bauvorganges ausgepackt werden können innerhalb der Maschine in einem zweiten Baubehälter bereit neue Teile gedruckt werden.

Die "Druck- und Beschichterebene" ist die Abstraktion des Ortes des momentan ablaufenden Bauprozesses. Da konstruktiv die Dosiereinheit und der Beschichter auf einer Verfahreinheit mit gemeinsamen Komponenten auf nahezu einer Höhe in der Vorrichtung bewegt werden, wird in dieser Beschreibung die "Druck- und Beschichterebene" als in der Oberkante einer neu aufgebrachten Schicht liegend betrachtet.

Die "Bauplattform" bewegt sich relativ zur Druck- und Beschichterebene. Diese Relativbewegung findet während des Bauprozesses in unterbrochenen Bewegungen in Schichtstärke statt. Sie definiert die Schichtstärke.

"Behälterwand" oder "Wand" oder "Seitenwand" bezeichnet eine Barriere für das Partikelmaterial. Das Partikelmaterial kann nicht von einer Seite auf die andere Seite der Wand gelangen. Wände im Sinne der Erfindung können biegeweich oder biegesteif ausgeführt sein. Dabei sind die Durchbiegungen für das Kriterium "Biegesteif" gering bezogen auf die Werkstücktoleranzen bei einem gegebenen Materialsystem.

Eine "Gleitpaarung" im Sinn der Erfindung ist ein Werkstoffkontakt dessen Reibungskoeffizient deutlich unter dem zweier gleicher Werkstoffe in Kontakt oder des Kontaktes zwischen Partikelmaterial und einem Wandwerkstoff liegt.

Eine "Dichtung" bezeichnet jeweils konstruktive Elemente die einen Durchtritt des Partikelmaterials durch Kontaktstellen zwischen relativ zueinander bewegten Wänden oder Wänden und einer Bauplattform verhindert.

Im Weiteren wird die Erfindung genauer dargestellt sowie deren bevorzugte Ausführungsformen.

Die Erfindung betrifft einen Baubehälter, insbesondere einen Wechselbehälter, für eine Vorrichtung zum Herstellen dreidimensionaler Modelle mittels Schichtaufbautechnik, der aufweist ein Baufeld auf einer Bauplattform, die in dem Baubehälter höhenverstellbar und vorzugsweise aus ihm entnehmbar ist,
mindestens zwei Seitenwände, die so ausgestaltet sind, dass beim Verfahren der Bauplattform die Gleitreibung zwischen den aufgebauten Schichten und den Seitenwänden vermindert oder im Wesentlichen vermieden wird, wobei die Bauplattform und die mindestens zwei Seitenwände mit gleicher Geschwindigkeit verfahren werden, dadurch gekennzeichnet, dass im Baubehälter mindestens eine seitlich angeordnete biegeweiche Wand (402) durch mindestens eine seitlich angeordnete biegesteife Wand (400) abgestützt ist, wobei diese Anordnung der Wände mindestens an zwei Seiten des Baubehälters vorhanden ist und die biegeweiche Wand (402) auf mindestens einer Umlenkrolle (700) umgelenkt wird.

In einem Aspekt ist die Erfindung die direkte Reduktion der Kräfte zwischen Partikelmaterial und Seitenwand im Baubehälter. Dazu können konstruktiv unterschiedliche Maßnahmen hilfreich sein. Die Vermeidung der Relativbewegungen bewirkt außerdem zur Gravitation keine zusätzlichen Kraftwirkungen im Pulver und kann somit unerwünschtes Setzen des Pulverkuchens vermeiden.

Dadurch kann vorteilhafter Weise erreicht werden, dass es zu keinen oder weniger Kräften kommt, die sich negativ auf die Stabilität der aufgetragenen und aufgebrachten Schichten auswirken, und somit die Abbildungsgenauigkeit in den gedruckten Bauteilen erhöht werden kann.

Vorzugsweise sind mindestens 3 oder 4 Seitenwände in eine Richtung biegeweich ausgeführt. Weiterhin bevorzugt ist, dass mindestens eine, vorzugsweise 2, 3 oder 4, Seitenwände eine segmentierte oder/und metallische Wand ist und in eine Richtung biegeweich ausgeführt ist.

In einer weiteren bevorzugten Ausführungsform ist der Baubehälter dadurch gekennzeichnet, dass eine Metall/Kunststoffgleitpaarung zur Reduktion der Reibungswirkung aufweist. Weiterhin bevorzugt weist der Baubehälter ein abgestütztes in alle Richtungen biegeweiches Band als Seitenwand auf.

In weiteren bevorzugten Ausführungsformen betrifft die Offenbarung insbesondere eine Vorrichtung zum Herstellen eines Bauteils (3D-Formkörper), wobei (a) in einem ersten Schritt mittels Pulverbeschichter (101) eine Partikelschicht auf eine Bauplattform (102) aufgebracht wird, (b) in einem zweiten Schritt mittels Binder-Dosiervorrichtung (100) ein Binder (400) selektiv aufgetragen wird, (c) in einem weiteren Schritt die aufgebrachte Schicht oder Schichten mittels Wärmequelle (600) einer Wärmebehandlung unterzogen werden, (d) die Bauplattform (102) abgesenkt wird oder der Pulverbeschichter (101) und gegebenenfalls weitere Vorrichtungsbauteile um eine Schichtdicke angehoben wird, Schritte (a) bis (d) wiederholt werden bis das Bauteil aufgebaut ist.

Der Natur des Partikelmaterials (300) gemäß stellt die dadurch entstehende Schüttung eine Belastung für den Baubehälter und die Bauplattform dar. Dabei entstehen ähnlich hydrostatischen Drücken charakteristische Druckprofile (201) auf die Wandungen (200). Lineare Verläufe des Drucks über die Bauhöhe treten im statischen Fall nicht auf. Wird das Pulver aber durch mechanische Vibrationen angeregt bilden sich nahezu hydrostatische also lineare Druckverläufe aus.

Die durch das Pulver verursachten Druckbelastungen auf die Behälterwand stellen Kräfte normal zur Wandung dar. Sobald eine Bewegung senkrecht zur Kraftrichtung auftritt entstehen Reaktionskräfte über die Reibung.

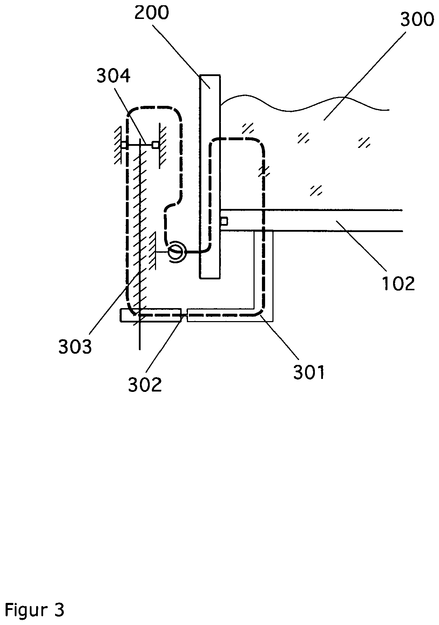

Dabei schließt sich der Kraftfluss meist über weite Teile der Vorrichtung. Figur 3 zeigt ein Schnittbild durch eine mögliche Vorrichtung. Die Kraft entsteht zwischen den Behälterwänden (200) und Schüttung (300). Durch die Schüttung wird die Kraft in den Behälterboden (102) geleitet. Weiter geht der Verlauf durch die Antriebspunkte (301) über die Kupplung (302) auf den Z-Achstrieb der meist als Hubspindel (303) ausgeführt wird. Dieser stützt sich meist über eine Lagerung (304) am Hauptgestellt der Vorrichtung ab. Über die Baubehälter-Halteriegel, die wiederum am Gestell der Vorrichtung angebracht sind, und die Baubehälterwand schließt sich der Kraftfluss.

Je nach konstruktiver Ausführung treten durch den Kraftfluss Biegungen und Längungen auf, die die Präzision der Vorrichtung beeinflussen. Erfindungsgemäß, wird nicht vornehmlich konstruktiv der Kraftfluss verkürzt und die Vorrichtung beanspruchungsgerecht ausgelegt, sondern die Kraftwirkung der Reibung bei Relativbewegung minimiert.

Die Reibung durch den direkten Kontakt von Wand und Partikelmaterial könnte durch eine Beschichtung minimiert werden. Abrasive Partikelmaterialien würden diese Beschichtung allerdings bei Relativbewegung schnell unwirksam machen. Dabei wirken selbst Kunststoffpulver abrasiv.

Ein Ansatz zur Vermeidung von Relativbewegungen ist eine Vorrichtung die die oben genannten Schritte zur Erstellung von Modellen im Inneren eines Baubehälters ausführt. Während des Bauprozesses wandert die Beschichtungs- und Druckeinheit (100, 101) aus dem Baubehälter. In der oberen Endlage kann der Baubehälter dann getauscht werden. Eine solche Vorrichtung weist den Nachteil auf, dass die Teile Beschichtungseinheit (101) und Dosiereinheit (100) endliche Abmessungen aufweisen und nicht nur den Arbeitsbereich überdecken. Damit würde sich die Vorrichtung insgesamt unnötig vergrößern. Zudem müssen die Beschleunigungsrampen der Komponenten berücksichtigt werden, da deren Funktion nur bei linearer Bewegung endwandfrei ausgeführt wird.

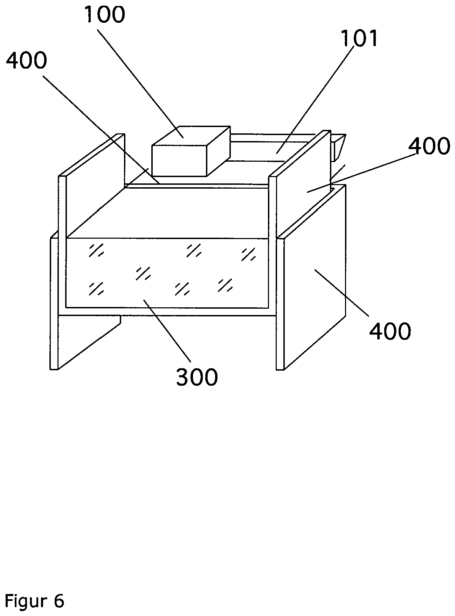

Diese technisch ungünstige Konstruktion kann ebenso erfindungsgemäß auf zwei relativ zur Schüttung stehende Wände reduziert werden. Figur 6 (nicht Teil der Erfindung) zeigt beispielhaft die Baubehälterkonstruktion einer solchen Vorrichtung.

Dazu wird ein U-förmiger Körper bestehend aus zwei biegesteifen Wänden (400) und der Bauplattform (102) gebildet. Dieser Körper wird zwischen zwei biegesteifen, gestellfesten Wänden (400) bewegt, die zu den Wänden des U-förmigen Körpers senkrecht angeordnet sind. An den Stirnflächen des Körpers sind jeweils Dichtungen (401) angebracht, die ein Ausfließen von Partikelmaterial verhindern. Die Ebene (701) der neu zu bildenden Schichten liegt bei dieser Vorrichtung immer an der Oberkante der gestellfesten Wände.

Bei dieser Vorrichtung können der Beschichter und die Dosiereinheit durch den entstehenden "Schacht" fahren und beschleunigt werden. Die übrigen Funktionsmerkmale gleichen denen einer Vorrichtung mit konventionellem Baubehälter.

Die Kräfte auf die bewegten Wände führen bei dieser Konstruktion zu keinerlei Reibungswirkung. Die Kräfte auf die stehenden Wände erzeugen die gleichen Reibungskräfte, die auch bei konventioneller Konstruktion entstehen. Bei erfindungsgemäßer Anordnung der Gesamtkonstruktion können allerdings die Kräfte und die besonders schädlichen Biegemomente auf die Bauplattform erheblich reduziert werden.

Störend bei einer solchen Vorrichtung sind die Einschränkungen im Verfahrbereich von Dosiereinheit und Beschichter. Um diese zur vermeiden müssen die Wände bei Abwärtsbewegung der Bauplattform gedanklich in Dosier- und Beschichterebene entstehen.

Eine solche Wirkung kann in erster Näherung durch die Verwendung einer Rolle (700) mit einer biegeweichen Wand (402) erreicht werden. Dabei wird die Wand von der Rolle durch die Bewegung der Bauplattform (102) abgerollt.

Eine biegeweiche Wand (402) wird dabei durch den Druck der Schüttung verformt. Um den Bauprozess nicht zu gefährden, müssen dabei die Verformungen durch konstruktive Maßnahmen gering gehalten werden. Erfindungsgemäß wird die biegeweiche Wand (402) durch eine biegesteife Wand (400) abgestützt. Der Reibungskoeffizient zwischen den kontaktierenden Materialien muss dabei erfindungsgemäß geringer sein als zwischen der biegesteifen Wand und dem Partikelmaterial.

Typische Werkstoffpaarungen sind Metall-/Kunststoffkontakte oder Paarungen als verschiedenen Metallen. Dabei kann beispielsweise die biegeweiche Wand (402) aus Metall als dünnes Blechband ausgeführt werden. Die biegesteife Wand (400) ist bei dieser Ausführung mit Kunststoff oder Messingleisten (900) belegt. Ebenso kann die Wand als Kunststoffband ausgeführt werden das auf einer Metallfläche abgleitet.

Das Band kann bevorzugt auch aus mehreren Materialien bestehen. Z.B. kann ein Kontaktmaterial zum Partikelmaterial besonders wiederstandfähig ausgeführt werden. Die Festigkeit kann über ein spezielles Zugband dargestellt werden. Auf der Rückseite kann eine Gleitbeschichtung aufgebracht sein.

Ebenso kann eine biegeweiche Wand (402) auch auf Rollen (901) gleiten. Dafür eignen sich pulverdichte Gliederketten. Gegenüber von Gleitpaarungen können die Reibungskräfte weiter reduziert werden. Konstruktiv können solche Rollen aber nur bei größeren Vorrichtungen sinnvoll zum Einsatz kommen.

Die oben genannte Vorrichtung mit zwei relativ zur Schüttung nicht bewegten Wänden kann auch mit vier nicht bewegten Wänden ausgeführt werden. Eine solche Vorrichtung würde die Reibungskräfte wie die oben genannte Vorrichtung mit 4 biegesteifen stehenden Wänden gemäß der Erfindung stark reduzieren.

Weitere bevorzugte Aspekte sowie beispielhaft eine bevorzugte Ausführungsform und Vorteile der Erfindung werden im Folgenden weiter ausgeführt.

### Beispiel eines erfindungsgemäßen bevorzugten Wechselbehälters

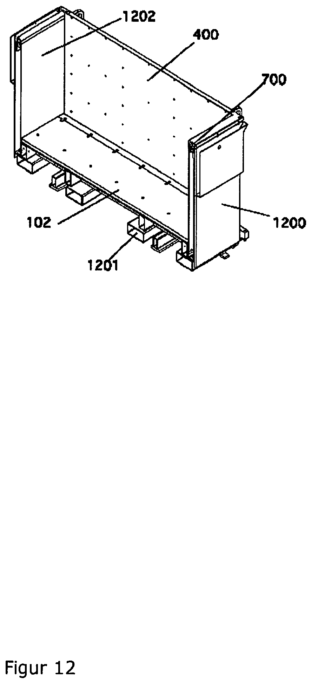

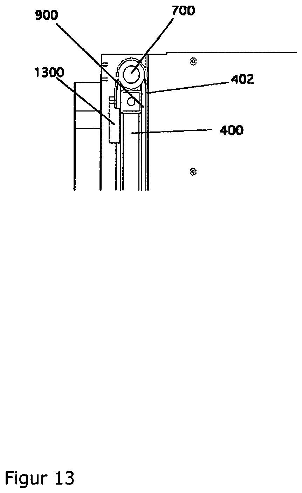

Figur 12 und 13 zeigen einen Baubehälter der erfindungsgemäße Aspekte beinhaltet.

Der Behälter ist für ein Bauvolumen von ca. 2000l ausgelegt. Bei der Verwendung von Gießereiformstoffen wie Sand oder Chromerz als Partikelmaterial kann das Schüttungsgewicht dabei bis 4500kg betragen. Während des Aufbauprozesses sind dabei als übliche Schichtstärken 300µm mit der Bauplattform zuzustellen. Die Positionierunsicherheit sollte dabei für ein prozesssicheres Bauen kleiner als +/- 30µm sein.

Um die statischen Verformungen klein zu halten und die Wirkung von Losen zu minimieren gliedert sich der Ablauf einer Schichtzustellung wie folgt. Zuerst wird, ausgehend von der Position der zuletzt selektiv verfestigten Schicht, die Bauplattform um einen Betrag, der wesentlich größer ist als die angestrebte Schichtstärke, abgesenkt. Erst danach wird die Bauplattform auf die gewünschte Position gebracht. Diese liegt um eine Schichtstärke weiter unten als die bereits ausgebrachte und verfestigte letzte Schicht.

Während des Positionierens werden verschiedene Komponenten wie das Maschinengestell oder die Bauplattform durch die wirkenden Kräfte deformiert. Dabei kann die Bauplattform, wenn sie durch die Pulverschüttung noch nicht ausreichend belastet ist, im Baubehälter hängen bleiben und der Positionierbewegung erst folgen wenn alle Lose überwunden sind und die Deformationsreaktionskräfte der Komponenten die Reibungskräfte überwinden. Diese Wegstrecke muss beim Absenken mindestens vorgesehen werden.

Die Aufwärtsbewegung der Bauplattform muss dann auf die vorbestimmte Position erfolgen. Auch hier sollte der Verfahrweg mindestens die Vorrichtung soweit vorspannen, dass stabile Verhältnisse erreicht werden.

Für das sichere Einhalten dieser Positionierunsicherheit ist weniger die während des Bauprozess ständig anwachsende Gewichtskraft problematisch als die Kräfte durch die Reibung der Schüttung. Diese Kräfte wachsen nicht nur ebenso wie die Gewichtskraft, sondern weisen durch Setzungen der Schüttung und den bekannten Stick-Slip-Effekt einen unvorhersehbaren Charakter auf. Deshalb steigt die Positionierunsicherheit durch diese Kräfte stark an.

Die Vorrichtung nach Figur 12 weist 2 feste Wände (400) auf. Diese sind aus massiven Aluminiumplatten, die an der äußeren Seite Ausfräsungen zur Gewichtsreduktion aufweisen. Die Innenflächen der Wände dieses Baubehälters haben glatte, gefräste Oberflächen.

Die Bauplattform (102) ist auf Grund der hohen Gewichtskräfte stark verrippt ausgeführt. An den kurzen Seiten erfolgt jeweils der Antriebseingriff. Die langen Seiten sind mit einer Dichtung ausgestattet. Sie ist zweiteilig aufgebaut. Zur Einstellung eines gleichmäßigen Anpressdrucks und damit zur sicheren Abdichtung gibt es ein Federelement und eine Dichtung, die gut auf den Wänden des Baubehälters gleiten kann. Das Federelement ist eine Schnur mit rechteckigem Querschnitt aus Silikonschaum. Die Dichtung ist eine Filzschnur mit rechteckigem Querschnitt.

In der unteren Endlage liegt die Bauplattform im Baubehälter auf. Damit ist gewährleistet, dass der Baubehälter aus der Maschine genommen werden kann, wenn die Antriebseingriffe ausgekuppelt sind.

Die kurzen Seiten sind mit der biegeweichen Behälterwand (402) fest verbunden.

Die biegeweiche Wand (402) ist bei diesem Baubehälter aus einer Aluminiumgliederkette (1202). Diese besteht aus Platten mit 20mm Breite, die mit Gummikedern untereinander verbunden sind.

Die kurze Seitenwand weist im inneren eine biegesteife Wand (400) auf. Diese ist als geschweißtes Gestell aus rechteckigen Rohrprofilen ausgeführt. Diese Profile tragen Kunststoffschienen (900) auf der Baubehälterinnenseite. Diese Minimieren die Reibung.

Am oberen Ende trägt diese Wand eine Umlenkrolle (700). Über diese wird die Aluminiumgliederkette (1202) geführt. Auf der der Behälterinnerseite abgewandten Seite der Wand sind Gewichte (1300) an der Aluminiumgliederkette (1202) angebracht. Diese sorgen bei der Aufwärtsfahrt für ein straffe Kette.

Die Antriebseingriffe werden um diese außen liegende Gliederkette herumgeführt. Damit sind sie leicht durch die 3D-Druckvorrichtung zu kontaktieren.

Die Dichtwirkung zwischen der Aluminiumgliederkette und der biegesteifen Wand (400) an der langen Seite des Baubehälters wird wieder über eine Filzschnur erreicht. Dabei ist an der Platte der langen Seite eine Ausfräsung vorhanden, die die Dichtschnur führt.

Die Oberkante des Baubehälters ist im Bereich der Umlenkrolle mit Profilen ausgestattet, die den Behälterinnenraum rechteckig ausgestalten. Die hier auftretende Reibung kann vernachlässigt werden, da in dieser Lage der Schüttungsdruck noch sehr klein ist.

Die langen und kurzen Wände bilden einen Rahmen, der mit der Bauplattform einen Behälter darstellt. Dieser wird durch eine Bodenkonstruktion (1201) ausgesteift. An dieser sind zusätzlich an der Unterseite Kufen angebracht, um den Behälter mit einem Rollentransportsystem bewegen zu können.

An den kurzen Wänden sind Vorrichtungen für die Verbindung von Behälter und 3D-Vorrichtung vorhanden. Diese können nach Einfahren des Behälters verriegelt werden. Dabei wird der Behälter positioniert und arretiert.

Zur Abdichtung gegen Verschmutzungen von außen ist der Baubehälter mit zusätzlichen Blechen (1200) verkleidet.

### Kurze Beschreibung der Figuren:

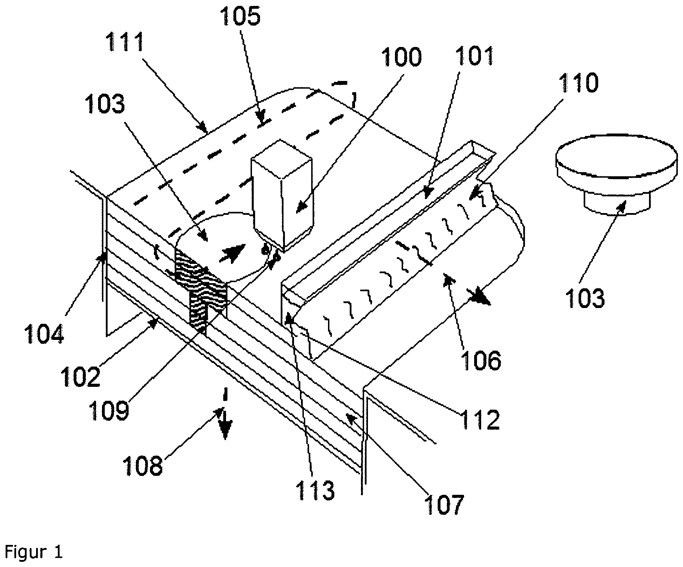

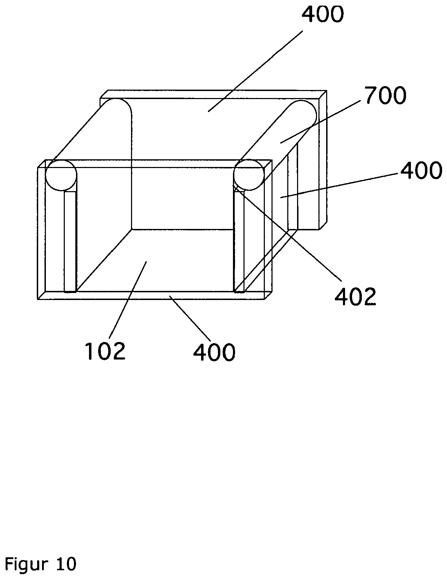

*Figur 1*: Schematische Darstellung der Komponenten eines pulverbasierten 3D-Druckers als geschnittener Schrägriss.

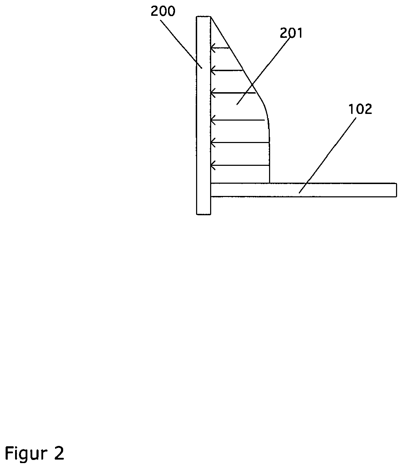

*Figur 2**:* Schematische Darstellung der Kraftwirkung der Pulverschüttung.
Figur 3: Kraftfluss in einer Vorrichtung des Standes der Technik als Schema

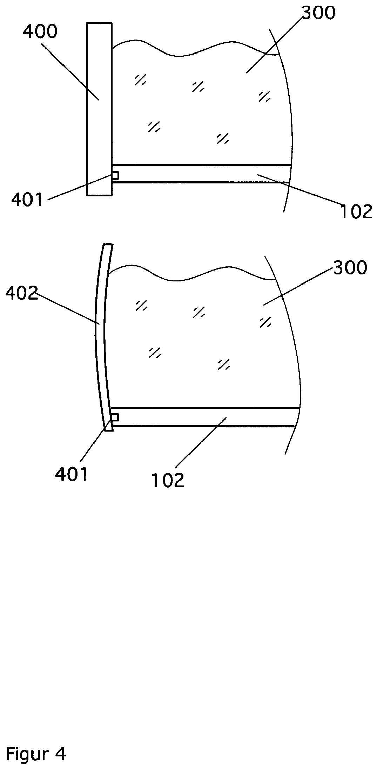

*Figur 4**:* Darstellung einer biegesteifen und einer biegeweichen Behälterwand

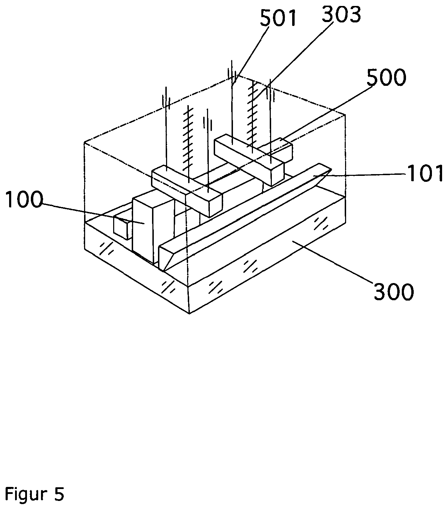

*Figur 5* (nicht Teil der Erfindung): Vorrichtung mit einem Baubehälter mit vier zur Schüttung nicht bewegten biegesteifen Wänden
*Figur* 6 (nicht Teil der Erfindung): Konstruktion eines Baubehälters mit zwei biegesteifen relativ zur Schüttung nicht bewegten Wänden und zwei biegesteifen zur Schüttung relativ bewegten Wänden.

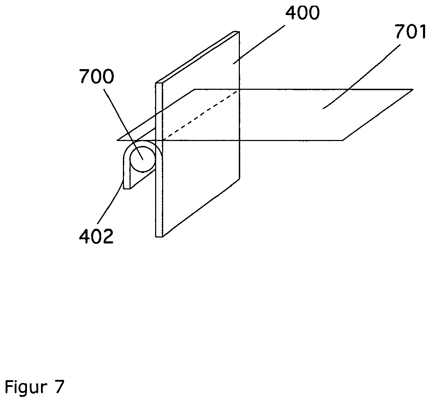

*Figur* 7: Schema der Vermeidung von Wänden im Verfahrbereich von Dosiereinheit und Beschichter durch biegeweiche Wände

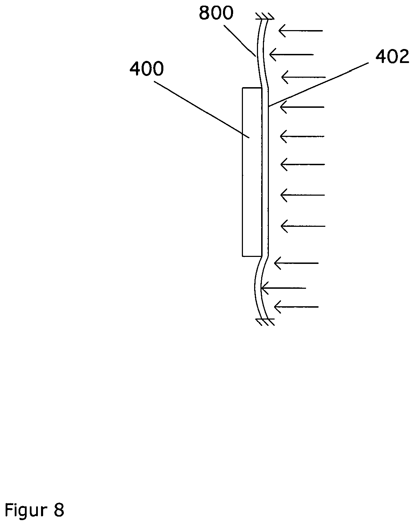

*Figur 8**:* Schema der Ableitung der Druckkräfte über hintereinander geschaltete Wandungen

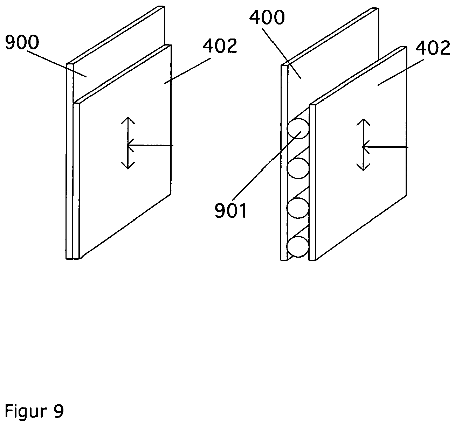

*Figur* 9 (nicht Teil der Erfindung): Minimierung der Kräfte durch den Einsatz einer Gleitpaarung
   Minimierung der Kräfte durch den Einsatz von Rollen
*Figur* 10: Baubehälter mit zwei relativ zur Schüttung nicht bewegten und biegeweichen Wänden

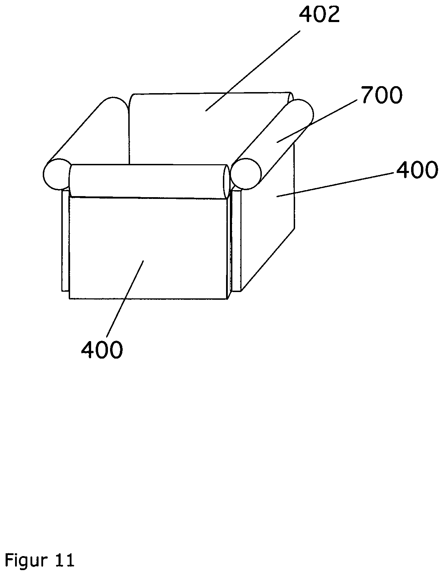

*Figur* 11: Baubehälter mit vier relativ zur Schüttung nicht bewegten und biegenweichen Wänden
*Figur* 12 (nicht Teil der Erfindung): Schnittdarstellung eines Baubehälters mit biegeweichen relativ zur Schüttung nicht bewegten Wänden
*Figur* 13: Konstruktive Details eines Baubehälters mit biegeweichen relativ zur Schüttung nicht bewegten Wänden

### Bezugszeichenliste

- 100: Binder-Dosiervorrichtung
- 101: Pulverbeschichter
- 102: Bauplattform
- 103: Bauteil (3D Formteil)
- 104: Baufeldberandung
- 107: Pulverschichten
- 200: Wand
- 201: Kraftverlauf
- 300: Partikelmaterial
- 301: Antriebspunkt
- 302: Kupplung
- 303: Hubspindel
- 304: Lagerung
- 400: Biegesteife Wand
- 401: (Filz-)Dichtung
- 402: Biegeweiche Wand
- 500: Verfahreinheit
- 501: Führungen
- 700: Umlenkrolle
- 701: Druck- und Beschichterebene
- 800: Freie Durchbiegung
- 900: Gleitfläche
- 901: Rollen
- 1200: Gehäuse
- 1201: Boden
- 1202: Aluminiumgliederkette
- 1300: Gegengewicht

## Patentansprüche

1. Baubehälter für eine Vorrichtung zum Herstellen dreidimensionaler Modelle mittels Schichtaufbautechnik, der aufweist ein Baufeld auf einer Bauplattform (102), die in dem Baubehälter höhenverstellbar und vorzugsweise aus ihm entnehmbar ist, mindestens zwei Seitenwände, die so ausgestaltet sind, dass beim Verfahren der Bauplattform die Gleitreibung zwischen den aufgebauten Schichten und den Seitenwänden vermindert oder im Wesentlichen vermieden wird, wobei die Bauplattform und die mindestens zwei Seitenwände mit gleicher Geschwindigkeit verfahren werden, im Baubehälter mindestens eine seitlich angeordnete biegeweiche Wand (402) durch mindestens eine seitlich angeordnete biegesteife Wand (400) abgestützt ist, wobei diese Anordnung der Wände mindestens an zwei Seiten des Baubehälters vorhanden ist und die biegeweiche Wand (402) auf mindestens einer Umlenkrolle (700) umgelenkt wird.

2. Baubehälter nach Anspruch 1, **dadurch gekennzeichnet, dass** mindestens 3 oder 4 Seitenwände in eine Richtung biegeweich ausgeführt sind.

3. Baubehälter nach einem der vorhergehenden Ansprüche, **dadurch gekennzeichnet, dass** mindestens 2, 3 oder 4, Seitenwände ein segmentierte oder/und metallische Wand ist und in eine Richtung biegeweich ausgeführt ist.

4. Baubehälter nach einem der vorhergehenden Ansprüche, **dadurch gekennzeichnet, dass** eine Metall/Kunststoffgleitpaarung zur Reduktion der Reibungswirkung genutzt wird.

5. Baubehälter nach einem der vorhergehenden Ansprüche, **dadurch gekennzeichnet, dass** ein abgestütztes in alle Richtungen biegeweiches Band als Seitenwand verwendet wird, vorzugsweise
**dadurch gekennzeichnet, dass** ein Band aus mehreren Materialien mit einer Gleitschicht verwendet wird.

6. Baubehälter nach einem der vorhergehenden Ansprüche, **dadurch gekennzeichnet, dass** ein endloses Band als Seitenwand verwendet wird.

## Claims

1. A building container for a device for producing three-dimensional models by means of a layer construction technique, said container comprising a construction field on a construction platform (102), which is adjustable in height in the building container and preferably removable therefrom, at least two side walls which are designed in such a way that, when the construction platform is moved, the sliding friction between the built-up layers and the side walls is reduced or substantially avoided, wherein the construction platform and the at least two side walls are moved at the same speed, at least one laterally arranged flexible wall (402) is supported in the building container by at least one laterally arranged rigid wall (400), wherein this arrangement of walls is present on at least two sides of the building container and the flexible wall (402) is deflected on at least one deflection roller (700).

2. The building container according to claim 1,
**characterised in that** at least 3 or 4 side walls are designed to be flexible in one direction.

3. The building container according to any one of the preceding claims,
**characterised in that** at least 2, 3 or 4 side walls are segmented or/and metallic walls and are designed to be flexible in one direction.

4. The building container according to any one of the preceding claims,
**characterised in that** a metal/plastic sliding pair is used to reduce the friction effect.

5. The building container according to any one of the preceding claims,
**characterised in that** a supported belt which is flexible in all directions is used as a side wall, preferably
**characterised in that** a belt of several materials with a sliding layer is used.

6. The building container according to any one of the preceding claims,
**characterised in that** an endless belt is used as a side wall.

## Revendications

1. Conteneur de construction pour un dispositif de construction couche par couche de modèles tridimensionnels, comprenant un champ de construction sur une plateforme de construction (102) qui est réglable en hauteur dans le conteneur de construction et de préférence amovible de celui-ci, au moins deux parois latérales qui sont conçues de telle manière que, lorsque la plateforme de construction est déplacée, le frottement de glissement entre les couches construites et les parois latérales est réduit ou sensiblement évité, où la plateforme de construction et les au moins deux parois latérales sont déplacées à la même vitesse, au moins une paroi souple en flexion (402) disposée latéralement est supportée dans le conteneur de construction par au moins une paroi rigide en flexion (400) disposée latéralement, cette disposition de parois étant présente sur au moins deux côtés du conteneur de construction et la paroi souple en flexion (402) étant déviée sur au moins un rouleau de déviation (700).

2. Conteneur de construction selon la revendication 1,
**caractérisé en ce qu'**au moins 3 ou 4 parois latérales sont conçues pour être flexibles en flexion dans une direction.

3. Conteneur de construction selon l'une quelconque des revendications précédentes,
**caractérisé en ce qu'**au moins 2, 3 ou 4 parois latérales sont des parois segmentées ou/et métalliques et sont conçues pour être souples en flexion dans une direction.

4. Conteneur de construction selon l'une quelconque des revendications précédentes,
**caractérisé en ce qu'**une paire de glissières métalliques/plastiques est utilisée pour réduire l'effet de frottement.

5. Conteneur de construction selon l'une quelconque des revendications précédentes,
**caractérisé en ce qu'**une bande supportée qui est souple en flexion dans toutes les directions est utilisée comme paroi latérale, de préférence **caractérisé en ce qu'**on utilise une bande de plusieurs matériaux avec une couche de glissement.

6. Conteneur de construction selon l'une quelconque des revendications précédentes,
**caractérisé par le fait qu'**une bande sans fin est utilisée comme paroi latérale.
